**Europäisches Patentamt**

**European Patent Office**

**Office européen des brevets**

(19)

(11) **EP 1 394 514 A1**

(12) **EUROPÄISCHE PATENTANMELDUNG**

(43) Veröffentlichungstag:
**03.03.2004 Patentblatt 2004/10**

(51) Int Cl.$^7$: **G01F 1/58**

(21) Anmeldenummer: **03013682.4**

(22) Anmeldetag: **17.06.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **28.08.2002 DE 10239476**

(71) Anmelder: **ABB PATENT GmbH
68526 Ladenburg (DE)**

(72) Erfinder:
- **Schwiderski, Hans W., Dipl.-Ing.
37176 Nörten-Hardenberg (DE)**
- **Keese, Dieter
37194 Wahlsburg (DE)**

(74) Vertreter: **Schmidt, Karl Michael et al
ABB Patent GmbH
Oberhausener Str. 33
40472 Ratingen (DE)**

(54) **Verfahren zum Betrieb eines magnetischinduktiven Durchflussmessers**

(57) Die Erfindung betrifft ein Verfahren sowie eine Einrichtung zum Betrieb einer induktiven Durchflussmesseinrichtung, bei welchem in Messperioden ein Elektromagnetsystem strombeaufschlagt wird, und ein entsprechendes durchflussabhängiges Signal gemessen wird, gemäß Oberbegriff des Patentanspruches 1 und 6.

Um hierbei zu erreichen, dass das Verhältnis von aufgebrachter Leistung und erzieltem Magnetfeld zu Gunsten eines höheren Signales verbessert werden kann, ist erfindungsgemäß vorgeschlagen, dass zu Beginn einer Messperiode ein kurzer pulsartiger Überstrom in das Magnetsystem eingespeist wird, worauf eine Reduktion des Stromes auf den Nennwert folgt.

EP 1 394 514 A1

**Beschreibung**

Die Erfindung betrifft ein Verfahren sowie eine Einrichtung zum Betrieb einer induktiven Durchflussmesseinrichtung, bei welchem in Messperioden ein Elektromagnetsystem strombeaufschlagt wird, und ein entsprechendes durchflussabhängiges Signal gemessen wird, gemäß Oberbegriff des Patentanspruches 1 und 6 .

Magnetisch induktive Durchflussmesseinrichtungen sind als sogenannte IDMs bekannt. Über eine Strombeaufschlagung eines Elektromagnetsystems erfolgt eine Felderregung. Das strömende Medium wechselwirkt mit dieser Felderregung und es entsteht ein geschwindigkeitsabhängiges Signal.

Dabei werden im übrigen Wechselfelder eingesetzt. Ziel einer jeden Messeinrichtung ist es, möglichst minimierte Eingangsleistungen zu realisieren.

Der Erfindung liegt daher die Aufgabe zugrunde, bei einem Verfahren sowie einer Einrichtung der gattungsgemäßen Art das Verhältnis von aufgebrachter Leistung und erzeiltem Magnetfeld zu Gunsten eines höheren Signales zu verbessern.

Die gestellte Aufgabe ist bei einem Verfahren der gattungsgemäßen Art erfindungsgemäß durch die kennzeichnenden Merkmale des Patentanspruches 1 gelöst.

Weitere vorteilhafte Ausgestaltungen des erfindungsgemäßen Verfahrens sind in den abhängigen Ansprüchen 2 bis 5 angegeben.

Im Hinblick auf eine Durchflussmesseinrichtung der gattungsgemäßen Art ist die gestellte Aufgabe erfindungsgemäß durch die kennzeichnenden Merkmale des Patentanspruches 6 gelöst.

Weitere vorteilhafte Ausgestaltungen zur erfindungsgemäßen Einrichtung sind in den übrigen abhängigen Ansprüchen angegeben.

Kern der verfahrensgemäßen Erfindung ist es, dass zu Beginn einer Messperiode ein kurzer pulsartiger Überstrom in das Magnetsystem eingespeist wird, worauf eine Reduktion des Stromes auf den Nennwert folgt.

Hierdurch wird die Remanenz des Magnetwerkstoffes genutzt, so dass auf den Überstrompuls folgend eine insgesamt größere Flussdichte erreicht wird. Insgesamt ergibt dies eine erhebliche Steigerung des Messsignales.

In weiterer vorteilhafter Ausgestaltung ist angegeben, dass das erzeugte Feld ein Wechselfeld ist.

In weiterer vorteilhafter Ausgestaltung ist angegeben, dass die Pulshöhe wählbar bzw einstellbar ist. Dementsprechend ist weiter ausgestaltet, dass die Pulsdauer, also die Dauer des überhöhten Stromes ebenfalls wählbar bzw einstellbar ist. Auf dieses Weise ist dann auch die zusätzlich in das System eingebrachte Energie wählbar.

In weiterer vorteilhafter Ausgestaltung ist angegeben, dass die Höhe des Nennstromes wählbar bzw einstellbar ist. Auf diese Weise lässt sich ein vorbestimmbares Verhältnis von Stromimpulshöhe und Stromnennwert einstellen, um ggfs werkstoffabhängige optimale Energie/Signal-Verhältnisse zu erzielen.

Im Hinblick auf eine Durchflussmesseinrichtung besteht der Kern der Erfindung darin, dass zu Beginn einer Messperiode ein kurzer pulsartiger Überstrom in das Magnetsystem generierbar ist, worauf eine definierte nachfolgende Reduktion des Stromes durch das Megnatsystem auf den Nennwert einstellbar ist. Dadurch kann nun die Durchflussmesseinrichtung in der erfindungsgemäßen Verfahrensweise betrieben werden.

In weiterer einrichtungsgemäßer Ausgestaltung ist das erzeugte Feld ein Wechselfeld.

In weiterer vorteilhafter Ausgestaltung ist angegeben, dass die Pulshöhe, die Pulsdauer, also die Dauer des überhöhten Stromes ebenfalls wählbar bzw einstellbar ist.

In weiterer vorteilhafter Ausgestaltung ist angegeben, dass auch die Höhe des Nennstromes nach dem Überstrompuls wählbar bzw einstellbar ist. Die damit erzielbare Wirkung ist oben bereits beschrieben.

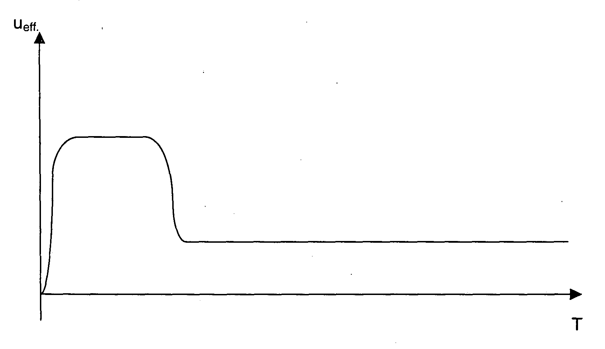

Die Erfindung ist in der Zeichnung dargestellt und nachfolgend näher beschrieben.

Die Abbildung zeigt den erfindungsgemäßen Spannungsverlauf bei der Ansteuerung des Magnetsystems der Durchflussmesseinrichtung.

Dargestellt ist der Verlauf der Effektivspannung U bei der an das Magnetsystem angelegten Wechselspannung. Zu Beginn einer Messperiode mit der Zeit T erfolgt die Ansteuerung mit einem Überspannungspuls. Nach der vorgebbaren Zeit $T_1$ wird die Spannung automatisch auf den Nennwert zurückgefahren, für die Dauer der Messperiode.

Die Größe des Messignales ergibt sich dabei aus

$$W = B * D * V$$

Hierbei ist B die magnetische Induktion,
V die Strömungsgeschwindigkeit des Mediums,
D der Durchfluss durch das Messrohr der Durchflussmesseinrichtung.

Zu Beginn einer Messperiode wird durch die Überspannung ein Überstrom ausgelöst, und dadurch wiederum eine sehr hohe Induktion erreicht.

Danach wird die Spannung und damit der Strom wieder auf den kleinen Nennwert reduziert. Aufgrund der Remanenz im Magnetsystem wird nun eine deutlich größer magnetische Flussdichte erzielt.

Wird beispielsweise die Spannung bzw der Strom im Nennbetrieb auf die Hälfte des Impulswertes reduziert, und die Induktion fällt lediglich auf 80 % des Impulswertes ab ergibt sich ein Verhältnis von 0,8/0,5 = 1,6 statt ansonsten bestenfalls 1 im Normalfall, d.h.

ohne Überstrompuls.

Dies bedeutet eine Signalerhöhung um 60 %. In der Umsetzung dieser Idee muss allerdings noch berücksichtigt werden, dass für die kurze Impulsmagnetisierung ebenfalls Energie aufgewendet werden muss.

Dies kann dabei überschlägig mit 10 % angesetzt werden, so dass im Resultat tatsächlich eine Signalsteigerung von 50 % möglich ist.

**Patentansprüche**

1. Verfahren zum Betrieb einer induktiven Durchflussmesseinrichtung, bei welchem in Messperioden ein Elektromagnetsystem strombeaufschlagt wird, und ein entsprechendes durchflussabhängiges Signal gemessen wird,
   **dadurch gekennzeichnet,**
   **dass** zu Beginn einer Messperiode ein kurzer pulsartiger Überstrom in das Magnetsystem eingespeist wird, worauf eine Reduktion des Stromes auf den Nennwert folgt.

2. Verfahren nach Anspruch 1,
   **dadurch gekennzeichnet,**
   **dass** das erzeugte Feld ein Wechselfeld ist.

3. Verfahren nach Anspruch 1 oder 2,
   **dadurch gekennzeichnet,**
   **dass** die Pulshöhe wählbar bzw einstellbar ist.

4. Verfahren nach Anspruch 3,
   **dadurch gekennzeichnet,**
   **dass** die Pulsdauer, also die Dauer des überhöhten Stromes ebenfalls wählbar bzw einstellbar ist.

5. Verfahren nach Anspruch 4,
   **dadurch gekennzeichnet,**
   **dass** die Höhe des Nennstromes wählbar bzw einstellbar ist.

6. Durchflussmesseinrichtung mit einem elektrisch beaufschlagbaren Magnetsystem und einer Messsignalverarbeitung,
   **dadurch gekennzeichnet,**
   **dass** zu Beginn einer Messperiode ein kurzer pulsartiger Überstrom in das Magnetsystem generierbar ist, worauf eine definierte nachfolgende Reduktion des Stromes durch das Magnetsystem auf den Nennwert einstellbar ist.

7. Durchflussmesseinrichtung nach Anspruch 6,
   **dadurch gekennzeichnet,**
   **dass** das im Magnetsystem erzeugbare Feld ein Wechselfeld ist.

8. Durchflussmesseinrichtung nach Anspruch 6 oder 7,
   **dadurch gekennzeichnet,**
   **dass** die Pulshöhe des Überstrompulses wählbar bzw einstellbar ist.

9. Durchflussmesseinrichtung nach Anspruch 8,
   **dadurch gekennzeichnet,**
   **dass** die Pulsdauer des Überstrompulses, also die Dauer des überhöhten Stromes ebenfalls wählbar bzw einstellbar ist.

10. Durchflussmesseinrichtung nach Anspruch 9,
    **dadurch gekennzeichnet,**
    **dass** die Höhe des Nennstromes durch das Magnetsystem wählbar bzw einstellbar ist.

**Europäisches Patentamt**

## EUROPÄISCHER RECHERCHENBERICHT

Nummer der Anmeldung

EP 03 01 3682

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 2 488 398 A (AICHI TOKEI DENKI KK) 12. Februar 1982 (1982-02-12) * Seite 7, Zeile 13 – Zeile 22; Abbildung 4 * ----- | 1-10 | G01F1/58 |
| X | US 6 237 424 B1 (HOWARTH CRAIG TIMOTHY ET AL) 29. Mai 2001 (2001-05-29) * Spalte 11, Zeile 66 – Spalte 12, Zeile 45; Abbildung 10 * ----- | 1-10 | |
| P,X | EP 1 260 797 A (ABB METERING LTD) 27. November 2002 (2002-11-27) * Spalte 12, Zeile 29, Absatz 57 – Spalte 13, Zeile 2, Absatz 59; Abbildung 6 * ----- | 1-10 | |

**RECHERCHIERTE SACHGEBIETE (Int.Cl.7)**

G01F

Der vorliegende Recherchenbericht wurde für alle Patentansprüche erstellt

| Recherchenort | Abschlußdatum der Recherche | Prüfer |
|---|---|---|
| Den Haag | 26. November 2003 | Boerrigter, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 03 01 3682

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-11-2003

| Im Recherchenbericht angeführtes Patentdokument | | Datum der Veröffentlichung | Mitglied(er) der Patentfamilie | | Datum der Veröffentlichung |
|---|---|---|---|---|---|
| FR 2488398 | A | 12-02-1982 | FR | 2488398 A1 | 12-02-1982 |
| US 6237424 | B1 | 29-05-2001 | GB | 2324606 A | 28-10-1998 |
| | | | AU | 741498 B2 | 29-11-2001 |
| | | | AU | 7068898 A | 24-11-1998 |
| | | | BR | 9808970 A | 01-08-2000 |
| | | | EP | 0975936 A1 | 02-02-2000 |
| | | | WO | 9849528 A1 | 05-11-1998 |
| | | | JP | 2001522457 T | 13-11-2001 |
| EP 1260797 | A | 27-11-2002 | GB | 2378761 A | 19-02-2003 |
| | | | EP | 1260797 A2 | 27-11-2002 |

EPO FORM P0461

Für nähere Einzelheiten zu diesem Anhang : siehe Amtsblatt des Europäischen Patentamts, Nr.12/82